# EUROPÄISCHE PATENTSCHRIFT

(11) **EP 1 435 027 B1**
(45) Veröffentlichungstag und Bekanntmachung des Hinweises auf die Patenterteilung: **01.02.2006**
(21) Anmeldenummer: 02776734.2
(22) Anmeldetag: 26.09.2002
(51) Int. Cl.: G05B 19/418

(54) **VERFAHREN ZUR ÜBERTRAGUNG EINES DATENTELEGRAMMS ZWISCHEN EINER ECHTZEIT-DOMAIN UND EINER NICHT-ECHTZEIT-DOMAIN UND KOPPELEINHEIT**
METHOD FOR TRANSMITTING A DATA TELEGRAM BETWEEN A REAL-TIME DOMAIN AND A NON-REAL-TIME DOMAIN AND A COUPLING UNIT
PROCEDE POUR TRANSMETTRE UN TELEGRAMME DE DONNEES ENTRE UN DOMAINE EN TEMPS REEL ET UN DOMAINE NON EN TEMPS REEL ET UNITE DE COUPLAGE

(30) Priorität: 26.09.2001 DE 10147448; 05.09.2002 DE 10241183
(43) Veröffentlichungstag der Anmeldung: 07.07.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz-Josef, 91180 Heideck (DE); KLOTZ, Dieter, 90768 Fürth (DE); SCHIMMER, Jürgen, 90473 Nürnberg (DE)
(86) Internationale Anmeldenummer: PCT/DE2002/003649
(87) Internationale Veröffentlichungsnummer: WO 2003/027784

(56) Entgegenhaltungen:
- EP-A- 0 510 290
- EP-A- 1 091 523
- WO-A-02/43336
- WO-A-02/076034
- US-A1- 2001 002 195
- BUCHWITZ M ET AL: "DAD NETZ IST DIE STEUERUNG TECHNOLOGIESPRUNG IN DER STEUERUNGSTECHNIK" , ELEKTRONIK, FRANZIS VERLAG GMBH. MUNCHEN, DE, VOL. 48, NR. 8, PAGE(S) 38,51-52,54-56 XP000902697 ISSN: 0013-5658 Seite 54; Abbildung 2

## Beschreibung

Die Erfindung betrifft ein Verfahren zur Übertragung eines Datentelegramms zwischen einer Nicht-Echtzeit-Domain und einer Echtzeit-Domain, eine Koppeleinheit und ein Computerprogrammprodukt.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden.

Teilnehmer sind beispielsweise zentrale Automatisierungsgeräte, Programmier-, Projektierungs- oder Bediengeräte, Peripheriegeräte wie z. B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen, verarbeiten. Teilnehmer werden auch Netzwerkknoten oder Knoten genannt.

Unter Kontrolleinheiten werden im Folgenden Regler- oder Steuerungseinheiten jeglicher Art verstanden, aber auch beispielsweise Koppeleinheiten (so genanntes Switches) und/oder Switch-Controller. Als Datennetze werden beispielsweise Bussysteme wie z. B. Feldbus, Profibus, Ethernet, Industrial Ethernet, FireWire oder auch PC-interne Bussysteme (PCI), etc., insbesondere aber auch isochrones Realtime-Ethernet verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z. B. Steuerungen, Antriebe, ...) verfügen heute im Allgemeinen über eine Schnittstelle zu einem zyklisch getakteten Kommunikationssystem. Eine Ablaufebene der Automatisierungskomponente (Fast-cycle) (z. B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z. B. Temperaturregelungen) der Automatisierungskomponente können ebenfalls nur über diesen Kommunikationstakt mit anderen Komponenten (z. B. Binärschalter für Lüfter, Pumpen, ...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Ein Peripherieabbild setzt sich aus einer Summe von Datensätzen zusammen, die über Echtzeitkommunikation mit anderen Automatisierungsgeräten ausgetauscht werden. Datensätze, die von einem Automatisierungsgerät über die Echtzeitkommunikation empfangen werden, sind Eingangsdaten. Datensätze, die von einem Automatisierungsgerät über die Echtzeitkommunikation gesendet werden, sind Ausgangsdaten. In einem Automatisierungsgerät werden in einem Anwendungsprogramm, das zyklisch aufgerufen wird, Eingangsdaten verarbeitet und neue Ausgangsdaten erzeugt. Das Anwendungsprogramm kann sich aus mehreren verschiedenen Funktionen zusammensetzen, die zu unterschiedlichen Zeiten mit verschiedenen Datensätzen arbeiten. Es ist nicht zwingend, dass in jedem Anwendungszyklus alle Funktionen des Anwendungsprogramms aufgerufen werden. Dadurch werden nicht in jedem Anwendungszyklus alle Eingangsdaten verarbeitet und neue Ausgangsdaten generiert.

Aus der DE 10058524 A1 ist ein System und Verfahren zur Übertragung von echtzeitkritischen und nichtechtzeitkritischen Daten über schaltbare Datennetze bekannt. Hierbei wird ein Übertragungszyklus in einen Teilzyklus für die echtzeitkritische und einen Teilzyklus für die nichtechtzeitkritische Übertragung unterteilt.

Ein gemeinsamer Nachteil von aus dem Stand der Technik bekannten echtzeitfähigen Kommunikationssystemen ist, dass sich bereits vorhandene nichtechtzeitfähige Systemkomponenten nicht in das echtzeitfähige Kommunikationssystem einfügen lassen. Aufgrund dessen erfordert der Aufbau eines echtzeitfähigen Kommunikationssystems einen hohen investiven Aufwand, da sämtliche bereits vorhandene, nichtechtzeitfähige Systeme ersetzt werden müssen.

Der Erfindung liegt die Aufgabe zugrunde, ein verbessertes Verfahren zur Übertragung von Datentelegrammen zwischen einer Nicht-Echtzeit- und einer Echt-Zeit-Domain sowie eine entsprechende Koppeleinheit und ein Computerprogrammprodukt zu schaffen, welche es ermöglichen, einen nichtechtzeitfähigen Teilnehmer an ein echtzeitfähiges Kommunikationssystem anzukoppeln.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die Erfindung ermöglicht eine Kommunikation zwischen Echtzeit- und Nicht-Echtzeit-Domainen und zwar in beide Richtungen. Hierzu wird auf einem Teilnehmer, der sowohl Echtzeitals auch Nicht-Echtzeit-Kommunikation beherrscht, eine Software installiert, die zur Ankopplung an die echtzeitfähige Domain dient. Diese Software dient dazu, die für die Echtzeit-Kommunikation erforderlichen Angaben in ein Nicht-Echtzeit-Datentelegramm zu "verpacken" bzw. die Angaben eines Nicht-Echtzeit-Telegramms in ein Echtzeit-Telegramm zu integrieren. Bei diesen Angaben handelt es sich insbesondere um die Echtzeit-Datentelegramm-Kennung, die in der Echtzeit-Domain für die geplante zyklische Kommunikation verwendet wird.

Die in dem Nicht-Echtzeit-Datentelegramm verpackten Angaben werden von einer Koppeleinheit, die das Nicht-Echtzeit-Datentelegramm aus der Nicht-Echtzeit-Domain empfängt, "entpackt". Die in dem Nicht-Echtzeit-Datentelegramm beinhalteten Nutzdaten werden in einen Speicherbereich eines Kommunikationsspeichers geschrieben, der durch die Echtzeit-Datentelegramm-Kennung eindeutig bestimmt ist.

Zur Einspeisung des Datentelegramms in die Echtzeit-Domain wird eine Sendeliste seitens der Koppeleinheit zyklisch abgearbeitet. Dieser Vorgang der zyklischen Abarbeitung der Sendeliste erfolgt nach dem für die Echtzeit-Domain vorgegebenen Timing-Schema und unabhängig von der Nicht-Echtzeit-Domain. Die Übertragung des für die Echtzeit-Kommunikation bestimmten Nicht-Echtzeit-Datentelegramms über die Nicht-Echtzeit-Domain kann daher asynchron zu der zyklischen Abarbeitung der Sendeliste erfolgen. Aufgrund dessen ist die Möglichkeit der Kopplung der Echtzeit- und Nicht-Echtzeit-Domainen realisiert.

Entsprechendes gilt auch für die Gegenrichtung. Ein für die Nicht-Echtzeit-Domain bestimmtes Echtzeit-Datentelegramm aus der Echtzeit-Domain hat Nutzdaten, die in ein Nicht-Echtzeit-Datentelegramm "verpackt" werden, und von der Koppeleinheit an einen Teilnehmer in der Nicht-Echtzeit-Domain weitergeleitet werden.

Nach einer bevorzugten Ausführungsform der Erfindung handelt es sich bei der Nicht-Echtzeit-Domain um ein Ethernet und bei der echtzeitfähigen Domain um ein isochrones, zyklisches Realtime-Ethernet. Vorzugsweise hat das isochrone, zyklische Realtime-Ethernet einen Kommunikationszyklus, der in einen Echtzeit-Teilzyklus und in einen Nicht-Echtzeit-Teilzyklus aufteilbar ist. Ein solches Kommunikationssystem ist an sich aus der DE 10058524 A1 bekannt.

Beispielsweise werden Nicht-Echtzeit-Datentelegramme aus der Nicht-Echtzeit-Domain, die für die Nicht-Echtzeit-Kommunikation bestimmt sind, über den Nicht-Echtzeit-Teilzyklus übertragen, während Nicht-Echtzeit-Datentelegramme aus der Nicht-Echtzeit-Domain, die für die Echtzeitkommunikation bestimmt sind, über den Echtzeit-Teilzyklus eingespeist.

Bisherige Ethernet-Komponenten in der Automatisierungstechnik sind lediglich für den Nicht-Echtzeit-, also nichtzyklischen Datenverkehr geeignet. Die Kopplung solcher Komponenten mit zukünftigen Echtzeit-fähigen Baugruppen muss jedoch aufgrund der bestehenden Netzwerke ermöglicht werden.

Dabei müssen insbesondere zeitkritische Daten einer Nicht-Echtzeit-fähigen Baugruppe (z. B. Istwerte einer Welle) in den Realtime-Bereich der Echtzeit-fähigen Komponenten eingeschleust werden, um einen garantierten Datentransfer innerhalb eines Isochronzyklusses zu gewährleisten (z. B. zum Prozessrechner, der die neuen Sollwerte der Welle berechnet). Auch der umgekehrte Weg, die Übergabe von Daten aus einer Echtzeit-Domain an eine Nicht-Echtzeit-Domain muss möglich sein, um Echtzeit-Daten innerhalb eines Isochronzyklus einem Nicht-Echtzeit-Teilnehmer zur Verfügung zu stellen (z. B. Transfer der neuen Sollwerte vom Prozessrechner zur Welle).

Im Gegensatz zur Nicht-Echtzeit-Kommunikation ist die Echtzeit-Kommunikation eine geplante Kommunikation. Jede Komponente in der Echtzeit-Domain weiß bereits vorab, wann und an welchen Empfangs- und Sendeports sie welche Echtzeit-Telegramme empfangen und weiterleiten bzw. einspeisen muss. Der Sendezeitpunkt jedes Echtzeit-Telegramms ist somit genau festgelegt. Für Nicht-Echtzeit-Daten, die in der Echtzeit-Domain versendet werden sollen, gilt daher, sie müssen bis spätestens zu Sendebeginn ihres Telegramms in Echtzeit eingeschleust worden sein.

Ein echtzeitfähiger Ethernet-Switch besteht aus Empfangs- und Sendeports, die sowohl Echtzeit-Daten zyklisch (Realtime-oder RT-Verkehr) versenden und empfangen können, als auch den bisherigen Nicht-Echtzeit-Betrieb (Non-Realtime- oder NRT-Verkehr) unterstützen. Ein solcher Ethernet-Switch stellt die Kopplung zwischen der Echtzeit- und Nicht-Echtzeit-Domain dar. Die an der NRT (Non Realtime)-Domain angeschlossenen Ports arbeiten ausschließlich im herkömmlichen Nicht-Echtzeitmodus, während die Ports an der RT (Realtime)-Domain sowohl Echtzeit- als auch Nicht-Echtzeit-Betrieb unterstützen. Für NRT-Daten, die über die RT-Kommunikation der RT-Domain versandt werden sollen, gilt vorzugsweise:
- Die NRT-Telegramme müssen am einspeisenden Switch in der NRT-Domain hochprior versandt werden, um die Transferzeiten in der NRT-Domain zu minimieren.
- Die NRT-Telegramme müssen an den oder die Koppel-Switches zwischen NRT- und RT-Domain adressiert sein.
- Aus dem am Koppel-Switch empfangenen NRT-Telegramm muss ersichtlich sein, dass die NRT-Daten über die RT-Kommunikation der RT-Domain und nicht über die NRT-Kommunikation der RT-Domain versandt werden müssen.

Wird am NRT-Port des Koppel-Switches ein Telegramm empfangen, welcher die obigen Voraussetzungen erfüllt, so wird in der Anwendungs-Software des Koppel-Switches der Dateninhalt des NRT-Telegramms separiert und als RT-Datensatz in den Speicherbereich des RT-Peripherieabbildes im Ethernet-Switch geschrieben. Im nächsten Isochronzyklus werden diese Daten als Bestandteil des RT-Peripherieabbildes in der RT-Domain versandt.

Für die umgekehrte Richtung gilt: Werden am Koppel-Switch RT-Telegramme an den Ports der RT-Domain gültig (nicht gestört) empfangen, so werden sie in den Speicherbereich als Bestandteil des RT-Peripherieabbildes im Ethernet-Switch eingetragen. Von dort kann die Software die Daten lesen und in den Rahmen (Frame) eines NRT-Telegramms integrieren. Dieses Telegramm wird dann über die Ports der NRT-Domain versendet. Dieses NRT-Telegramm muss dann mit hoher Priorität versendet werden, um eine schnellstmögliche Übertragung (innerhalb des Isochronzyklus) zum Empfangs-Switch in der NRT-Domain zu gewährleisten.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Roboter, Handlingsystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- Fig. 1:: ein Kommunikationssystem mit einem Teilnetzwerk mit Echtzeit-Datenverkehr und einem Teilnetzwerk mit Nicht-Echtzeit-Datenverkehr,
- Fig. 2:: ein Blockdiagramm einer bevorzugten Ausführungsform einer Ankopplung eines nichtechtzeitfähigen Teilnehmers an ein echtzeitfähiges Kommunikationssystem,
- Fig. 3:: die Einschleusung von NRT-Datensätzen in die RT-Domain,
- Fig. 4:: ein Flussdiagramm einer Ausführungsform eines erfindungsgemäßen Verfahrens zur Einspeisung von Datentelegrammen aus der Nicht-Echtzeit-Domain in eine echtzeitfähige Domain,
- Fig. 5:: die Einschleusung von RT-Datensätzen in die NRT-Domain.

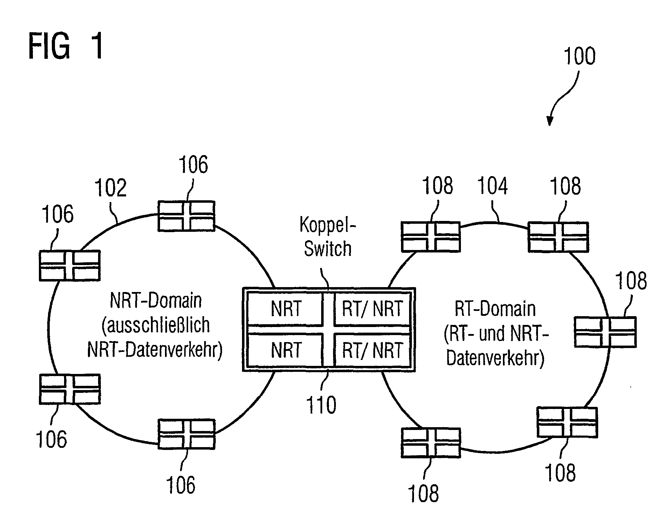

Die Figur 1 zeigt ein Kommunikationssystem 100 mit einem Teilnetzwerk 102 und einem Teilnetzwerk 104. Durch das Teilnetzwerk 102 ist eine NRT-Domain realisiert, die ausschließlich für den NRT-Datenverkehr geeignet ist. Hierbei kann es sich zum Beispiel um ein Standard-Ethernet handeln. Zu dem Teilnetzwerk 102 gehören nichtechtzeitfähige Teilnehmer 106.

Bei dem Teilnetzwerk 104 handelt es sich um ein isochrones zyklisches Realtime-Ethernet, wodurch die RT-Domain realisiert ist. Vorzugsweise kann auch in der RT-Domain NRT-Datenverkehr erfolgen. Hierzu kann beispielsweise ein an sich aus der DE 10058524 A1 bekanntes Kommunikationssystem verwendet werden, bei dem ein Kommunikationszyklus in einen Echtzeit-und in einen Nicht-Echtzeit-Teilzyklus aufteilbar ist. Zu dem Teilnetzwerk 104 gehören echtzeitfähige Teilnehmer 108.

Die Teilnetzwerke 102 und 104 werden durch einen Koppelswitch 110 miteinander gekoppelt. Der Koppelswitch 110 ermöglicht eine Weiterleitung von Datentelegrammen aus der NRT-Domain in die RT-Domain und zwar sowohl für den RT- als auch wahlweise für den NRT-Datenverkehr in der RT-Domain. Umgekehrt ermöglicht der Koppelswitch 110 die Weiterleitung von Datentelegrammen aus der RT-Domain in die NRT-Domain des Teilnetzwerks 102, wobei es sich sowohl um RT- als auch um NRT-Datentelegramme handeln kann.

Von besonderem Vorteil ist hierbei, dass existierende nichtechtzeitfähige Teilnehmer 106 zum Aufbau des Kommunikationssystems 100 verwendet werden können, d. h., dass auf die existierende Hardware für den Aufbau des Kommunikationssystems 100 zurückgegriffen werden kann, was den investiven Aufwand reduziert. Zur Ankopplung der Teilnehmer 106 ist lediglich die Installation eines zusätzlichen Programms erforderlich.

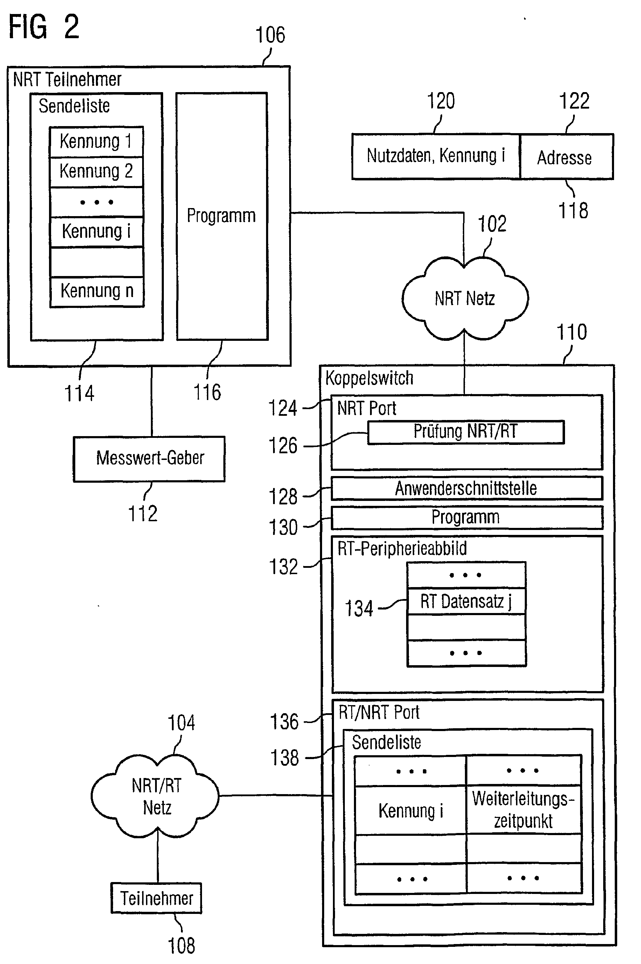

Die Figur 2 zeigt ein Blockdiagramm einer Ausführungsform einer solchen Ankopplung eines Teilnehmers 106 an einen Koppelswitch 110.

Der Teilnehmer 106 ist mit einem oder mehreren Messwert-Gebern 112 verbunden. Der Messwert-Geber 112 liefert ständig Messwerte, die zu einem anderen Teilnehmer 108 in Echtzeit übertragen werden müssen.

Hierzu beinhaltet der Teilnehmer 106 eine Sendeliste 114. Die Sendeliste hat eine Sequenz von Kennungen i, wobei jede der Kennungen der Sendeliste 114 einem zu erzeugenden Datentelegramm entspricht.

Das Programm 116 des Teilnehmers 106 arbeitet die Sendeliste 114 zyklisch wiederholend ab. Wenn die Kennung i an der Reihe ist, übernimmt das Programm 116 den aktuellen Wert des Messwert-Gebers 112 und generiert daraus ein Nicht-Echtzeit-Datentelegramm 118. Bei dem Datentelegramm 118 kann es sich zum Beispiel um ein Ethernet-Telegramm handeln.

Das Datentelegramm 118 hat einen Nutzdatenbereich 120 und einen Adressbereich 122.

Der Nutzdatenbereich 120 trägt die Nutzdaten, d. h. den aktuellen Messwert des Messwert-Gebers 112, sowie die entsprechende Kennung i. Da das Datentelegramm für die Echtzeit-Kommunikation bestimmt ist, wird eine entsprechende Echtzeit-Kennung von dem Programm 116 in das Datentelegramm 118 kodiert. In dem hier betrachteten Ausführungsbeispiel erfolgt dies so, dass für die Adresse in dem Adressbereich 122 eine bestimmte Multicast-Adresse gewählt wird. Diese bestimmte Multicast-Adresse indiziert, dass es sich bei dem Datentelegramm 118 um ein für die Echtzeit-Kommunikation bestimmtes Datentelegramm handelt.

Das Datentelegramm 118 wird von dem Teilnehmer 106 über das Teilnetzwerk 102 gesendet und von dem Koppelswitch 110 empfangen.

Der Koppelswitch 110 hat einen NRT-Port 124, der zur Kopplung des Koppelswitches 110 mit dem Teilnetzwerk 102 dient. Der Port 124 hat ein Modul 126 zur Prüfung, ob es sich bei einem von dem Teilnetzwerk 102 empfangenen Datentelegramm um ein für die Echtzeit-Kommunikation oder für die Nicht-Echtzeit-Kommunikation bestimmtes Datentelegramm handelt. In der hier betrachteten Ausführungsform erfolgt die Prüfung durch das Modul 126 so, dass die Adresse in dem Adressbereich 122 eines empfangenen Datentelegramms 118 mit der bestimmten Multicast-Adresse verglichen wird. Wenn es sich bei der Adresse um die bestimmte Multicast-Adresse handelt, so folgt daraus für den Koppelswitch 110, dass das über das Teilnetzwerk 102 empfangene Datentelegramm für die Echtzeit-Kommunikation in dem Teilnetzwerk 104 bestimmt ist.

Der Koppelswitch 110 hat ferner eine Anwenderschnittstelle 128, über die die empfangenen Daten an ein Programm 130 übergeben werden können.

Ferner hat der Koppelswitch 110 einen Kommunikationsspeicher 132, der zur Abspeicherung des RT-Peripherie-Abbildes dient. Jede der Echtzeit-Datentelegramm-Kennungen i ist dabei einem Speicherbereich in dem Kommunikationsspeicher 132 eindeutig zugeordnet. Beispielsweise ist die Kennung i dem Speicherbereich 134 für den Echtzeit-Datensatz j zugeordnet. Bei diesem Echtzeit-Datensatz j handelt es sich um den Datensatz, der die Nutzdaten aus dem Nutzdatenbereich 120 des Datentelegramms 118 beinhalten soll.

Der Koppelswitch hat ferner einen Port 136. Über den Port 136 können Datentelegramme in das Teilnetzwerk 104 gesendet werden und zwar sowohl während eines Echtzeit-Teilzyklus als auch während eines Nicht-Echtzeit-Teilzyklus.

Für den Echtzeit-Teilzyklus hat der Port 136 eine Sendeliste 138. Die Sendeliste 138 hat eine Sequenz von Echtzeit-Datentelegramm-Kennungen, die zyklisch abgearbeitet wird. Jeder der Kennungen in der Sendeliste 138 ist dabei ein Weiterleitungszeitpunkt zugeordnet, zu dem innerhalb eines Echtzeit-Teilzyklusses die Sendung des entsprechenden Echtzeit-Datentelegramms erfolgt. Insbesondere ist auch der Kennung i ein bestimmter Weiterleitungszeitpunkt in der Sendeliste 138 zugeordnet.

Wenn der Koppelswitch das Datentelegramm 118 über das Teilnetzwerk 102 an seinem Port 124 empfängt, läuft also folgender Vorgang ab: Zunächst wird in dem Modul 126 geprüft, ob das Datentelegramm 118 für die Echtzeit-Kommunikation in dem Teilnetzwerk 104 bestimmt ist. Wenn dies der Fall ist, werden die Nutzdaten und die Kennung i aus dem Nutzdatenbereich 120 über die Anwenderschnittstelle 128 an das Programm 130 übergeben. Das Programm 130 speichert dann die Nutzdaten in dem Speicherbereich 134 in den Echtzeit-Datensatz j, der der Kennung i eindeutig zugeordnet ist.

Parallel und unabhängig hierzu wird von dem Port 136 die Sendeliste 138 in dem Echtzeit-Teilzyklus abgearbeitet. Wenn das Datentelegramm mit der Kennung i in der Sendeliste zur Bearbeitung ansteht, werden die aktuell in dem Speicherbereich 134 befindlichen Daten ausgelesen.

Das Datentelegramm mit diesen Nutzdaten wird dann zu dem bestimmten Weiterleitungszeitpunkt von dem Port 136 in das Teilnetzwerk 104 eingespeist, so dass das Datentelegramm an den Teilnehmer 108 gelangen kann.

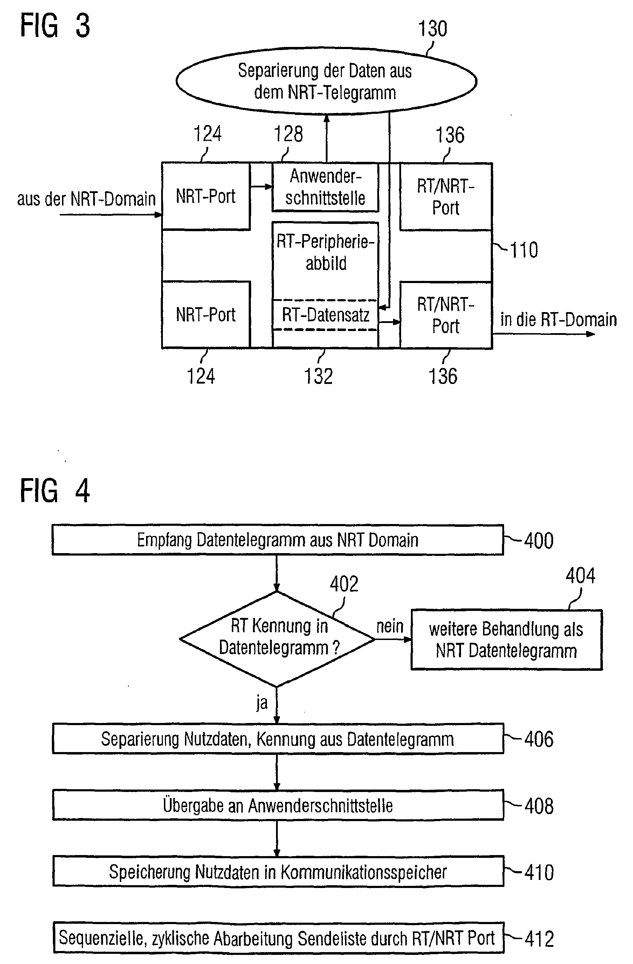

Die Figur 3 veranschaulicht diesen Vorgang nochmals, wobei in der Ausführungsform der Figur 3 der Koppelswitch 110 mehrere Ports 124 und mehrere Ports 136 aufweist.

Die Figur 4 zeigt ein entsprechendes Flussdiagramm. In dem Schritt 400 erfolgt der Empfang eines Datentelegramms aus der NRT-Domain. In dem Schritt 402 wird geprüft, ob das Datentelegramm eine bestimmte Echtzeit-RT-Kennung aufweist. Ist dies nicht der Fall, so wird das empfangene Datentelegramm im Schritt 404 als normales Datentelegramm behandelt, d. h. es wird unverändert über den NRT-Teilzyklus von dem Koppelswitch weitergeleitet. Dadurch wird insbesondere ein so genanntes "Durchtunneln" eines Nicht-Echtzeit-Datentelegramms durch die echtzeitfähige Domain ermöglicht.

Wenn es sich jedoch um ein Datentelegramm mit einer RT-Kennung handelt, werden in dem Schritt 406 die Nutzdaten und die Kennung aus dem Nutzdatenbereich des Datentelegramm separiert und in dem Schritt 408 an eine Anwenderschnittstelle übergeben. Ein entsprechendes Programm speichert dann die Nutzdaten in einem Speicherbereich des Kommunikationsspeichers des Koppelswitches, der durch die Kennung eindeutig identifiziert ist.

Parallel und unabhängig davon wird im Schritt 412 eine Sendeliste von dem RT/NRT-Port des Koppelswitches sequenziell und zyklisch abgearbeitet. Wenn zum Zeitpunkt der Erzeugung eines Echtzeit-Daten-Telegramms mit der Kennung noch die alten Nutzdaten im Kommunikationsspeicher stehen, so werden diese verwendet. Wenn dagegen bereits die gerade empfangenen Nutzdaten in dem Kommunikationsspeicher stehen, so werden diese verwendet. Vorzugsweise haben die Nutzdaten einen Zeitstempel, so dass der empfangene Teilnehmer des Teilnetzwerkes 104 (vergleiche Teilnehmer 108 der Figur 2) eine Angabe über das Alter der Nutzdaten hat.

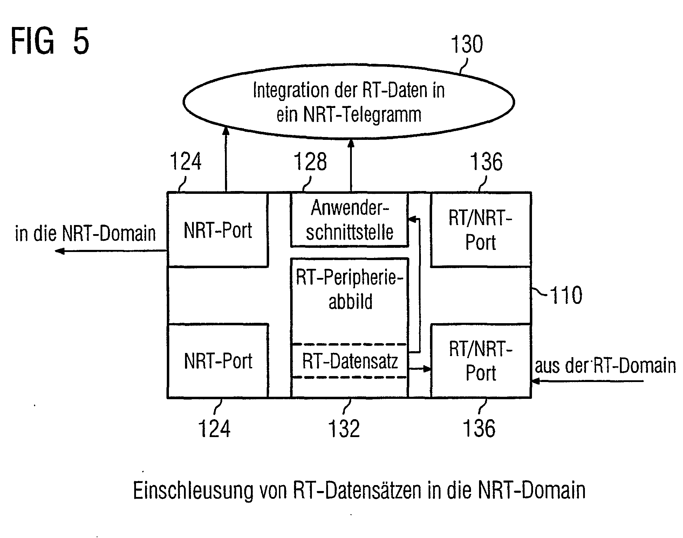

Die Figur 5 veranschaulicht den entsprechenden Vorgang in der umgekehrten Richtung, d. h. aus der RT-Domain in die NRT-Domain. Ein von dem Port 136 in dem RT-Teilzyklus des Kommunikationszyklus empfangenes Datentelegramm wird so verarbeitet, dass die Nutzdaten des Datentelegramms in den durch die Kennung des Datentelegramms eindeutig bestimmten Speicherbereich des Kommunikationsspeichers 132 eingetragen werden. Ob ein Datentelegramm an einen Teilnehmer 106 gerichtet ist, ist im Programm 130 gespeichert. Ist dies der Fall, so werden die Nutzdaten des Peripherieabbildes zu einem Nicht-Echtzeit-Telegramm integriert und über die Anwenderschnittstelle den NRT-Ports 124 übergeben. Die Adressierung des Nicht-Echtzeit-Teilnehmers 106 erfolgt eindeutig durch die Position der Nutzdaten im RT-Peripherieabbild.

Das Programm 130 erzeugt dann z. B. ein Standard-Ethernet-Datentelegramm mit den Nutzdaten in dem Nutzdatenbereich des Ethernet-Telegramms. Das Ethernet-Telegramm wird dann von dem Port 124 in die NRT-Domain eingespeist. Das Programm 130 kann immer, in jedem Kommunikationszyklus, für die entsprechenden Nutzdaten aus dem RT-Peripherieabbild 132 ein Nicht-Echtzeit-Telegramm generieren, da in der Echtzeit-Domain ein gesicherter Austausch der Daten in jedem Kommunikationszyklus erfolgt.

## Patentansprüche

1. Verfahren zur Übertragung eines Datentelegramms (118) aus einer Nicht-Echtzeit-Domain (102) in eine Echtzeit-Domain (104) mit folgenden Schritten:
- Erzeugung eines Nicht-Echtzeit-Datentelegramms (118) mit einem Nutzdatenbereich (120), wobei das Datentelegramm eine Echtzeit- oder eine Nicht-Echtzeit-Kennung (122) beinhaltet, und wobei das Datentelegramm eine Datentelegramm-Kennung (Kennung i) in seinem Nutzdatenbereich (120) beinhaltet, wenn die Echtzeitkennung (122) vorhanden ist,
- Übertragung des Nicht-Echtzeit-Datentelegramms (118) über die Nicht-Echtzeit-Domain (102) zu einer Koppeleinheit (110),
- Prüfung (126) des Nicht-Echtzeit-Datentelegramms auf das Vorhandensein der Echtzeit-Kennung (122) durch die Koppeleinheit (110),
- für den Fall, dass die Echtzeitkennung (122) vorhanden ist: Übergabe der Nutzdaten und der Echtzeit-Kennung (Kennung i) aus dem Nutzdatenbereich (120) des Nicht-Echtzeit-Datentelegramms (118) an eine Anwenderschnittstelle (128) des Koppelknotens, Speichern der Nutzdaten in einem Speicherbereich (134) eines Kommunikationsspeichers (132), der der Kennung zugeordnet ist,
- zyklische Abarbeitung einer Sendeliste (123), die die Datentelegrammkennung (Kennung i) des Nicht-Echtzeit-Datentelegramms beinhaltet, wobei zur Erzeugung eines Echtzeit-Datentelegramms auf den Kommunikationsspeicher zugegriffen wird.

2. Verfahren nach Anspruch 1, wobei zur Erzeugung der Nicht-Echtzeit-Datentelegramme (118) eine Sendeliste (114) mit Datentelegramm-Kennungen (Kennung i) zyklisch abgearbeitet wird.

3. Verfahren nach Anspruch 1 oder 2, wobei die Echtzeit-Kennung des Nicht-Echtzeit-Datentelegramms in der Adresse (122) des Nicht-Echtzeit-Datentelegramms kodiert ist.

4. Verfahren nach Anspruch 1, 2 oder 3, wobei es sich bei der Adresse (122) um eine bestimmte Multicastadresse handelt.

5. Verfahren nach einem der vorhergehenden Ansprüche 1 bis 4, wobei es sich bei dem Nicht-Echtzeit-Datentelegramm (118) um ein Ethernetdatentelegramm handelt.

6. Verfahren nach einem der vorhergehenden Ansprüche 1 bis 5, wobei die Echtzeit-Domain einen Kommunikationszyklus aufweist, der in einen Echtzeit- und in einen Nicht-Echtzeit-Teilzyklus aufteilbar ist, und wobei ein Nicht-Echtzeit-Datentelegramm aus der Nicht-Echtzeit-Domain, welches keine Echtzeitkennung aufweist, über den Nicht-Echtzeit-Teilzyklus in der Echtzeit-Domain übertragen wird.

7. Koppeleinheit zum Empfang eines Datentelegramms (118) aus einer Nicht-Echtzeit-Domain (102) und zur Weiterleitung des Datentelegramms in eine Echtzeit-Domain (104) mit:
- Mitteln (124) zum Empfang eines Nicht-Echtzeit-Datentelegramms (118) mit einem Nutzdatenbereich (120), wobei das Datentelegramm eine Echtzeit- oder eine Nicht-Echtzeit-Kennung (122) beinhaltet, und wobei das Datentelegramm eine Datentelegramm-Kennung (Kennung i) in seinem Nutzdatenbereich beinhaltet, wenn die Echtzeit-Kennung (122) vorhanden ist,
- Mitteln (126) zur Prüfung des Nicht-Echtzeit-Datentelegramms auf das Vorhandensein der Echtzeitkennung,
- Mitteln zur Übergabe der Nutzdaten und der Datentelegramm-Kennung aus dem Nutzdatenbereich (120) des Nicht-Echtzeit-Datentelegramms an eine Anwenderschnittstelle (128), wenn die Echtzeit-Kennung vorhanden ist,
- Mitteln (130) zum Speichern der Nutzdaten in einem Speicherbereich (134) eines Kommunikationsspeichers (132), der der Kennung zugeordnet ist,
- Mitteln zum zyklischen Abarbeiten einer Sendeliste (138), die die Datentelegramm-Kennung (Kennung i) beinhaltet, wobei zur Erzeugung eines Echtzeit-Daten-telegramms zur Weiterleitung über die Echtzeit-Domain auf den Kommunikationsspeicher (132) zugegriffen wird.

8. Koppeleinheit nach Anspruch 7, wobei die Mittel (124) zur Prüfung so ausgebildet sind, dass das Vorhandensein einer bestimmten Adresse (122) in dem Nicht-Echtzeit-Datentelegramm (118) geprüft wird.

9. Koppeleinheit nach Anspruch 8, wobei es sich bei der bestimmten Adresse um eine Multicast-Adresse handelt.

10. Koppeleinheit nach einem der vorhergehenden Ansprüche 7, 8 oder 9, wobei es sich bei dem Nicht-Echtzeit-Datentelegramm (118) um ein Ethernet-Datentelegramm handelt.

11. Koppeleinheit nach einem der vorhergehenden Ansprüche 7 bis 10, wobei die Weiterleitung des Nicht-Echtzeit-Datentelegramms (118) mit einer Echtzeitkennung in dem Echtzeit-Teilzyklus eines Kommunikationszyklus erfolgt.

12. Computerprogrammprodukt, insbesondere digitales Speichermedium, zur Erzeugung eines Nicht-Echtzeit-Daten-telegramms (118) für einen Teilnehmer (106) einer Nicht-Echtzeit-Domain (102), mit Programmmitteln zur Durchführung der folgenden Schritte:
- zyklische Abarbeitung einer Sendeliste (114), die eine Sequenz von Datentelegramm-Kennungen (Kennung i) von Echtzeit-Datentelegrammen einer Echtzeit-Domain beinhaltet (104),
- Erzeugung eines Nicht-Echtzeit-Datentelegramms (118) für jede Kennung der Sendeliste (114), wobei das Nicht-Echtzeit-Datentelegramm einen Nutzdatenbereich (120) aufweist, und in den Nutzdatenbereich die Datentelegramm-Kennung (Kennung i) und Nutzdaten aufgenommen werden.

13. Computerprogrammprodukt nach Anspruch 12, wobei die Programmmittel zur Kennzeichnung des Nicht-Echtzeit-Datentelegramms (118) mit einer Echtzeitkennung (122) ausgebildet sind.

14. Computerprogrammprodukt nach Anspruch 12 oder 13, wobei es sich bei der Echtzeitkennung um eine bestimmte Adresse (122), vorzugsweise eine bestimmte Multicast-Adresse handelt.

15. Verfahren zur Übertragung eines Datentelegramms aus einer Echtzeit-Domain (104) in eine Nicht-Echtzeit-Domain (102) mit folgenden Schritten:
- zyklische Abarbeitung einer Empfangsliste, welche eine Datentelegramm-Kennung eines Echtzeit-Datentelegramms beinhaltet,
- Speicherung der Nutzdaten des empfangenen Echtzeit-Datentelegramms mit der Kennung in einem Kommunikationsspeicher (132),
- Übergabe der Nutzdaten und der Kennung an eine Anwenderschnittstelle (128),
- Erzeugung eines Nicht-Echtzeit-Datentelegramms mit einem Nutzdatenbereich, wobei der Nutzdatenbereich zur Aufnahme der Nutzdaten und der Datentelegramm-Kennung dient.

16. Verfahren nach Anspruch 15, wobei die Echtzeit-Domain einen Kommunikationszyklus aufweist, der in einem Echtzeit-Teilzyklus und in einen Nicht-Echtzeit-Teilzyklus unterteilbar ist, und wobei ein aus der Echtzeit-Domain (104) über einen Nicht-Echtzeit-Teilzyklus des Kommunikationszyklus empfangenes Nicht-Echtzeit-Datentelegramm unverändert in die Nicht-Echtzeit-Domain (102) weitergeleitet wird.

17. Koppeleinheit zur Übertragung eines Datentelegramms aus einer Echtzeit-Domain (104) in eine Nicht-Echtzeit-Domain (102) mit:
- Mitteln zur zyklische Abarbeitung einer Empfangsliste, welche Datentelegramm-Kennungen von Echtzeit-Datentelegrammen beinhaltet,
- Mitteln zur Speicherung der Nutzdaten eines empfangenen Echtzeit-Datentelegramms in einem Kommunikationsspeicher (132),
- Mitteln zur Übergabe der Nutzdaten und der Kennung an eine Anwenderschnittstelle (128),
- Mitteln zur Erzeugung eines Nicht-Echtzeit-Daten-telegramms mit einem Nutzdatenbereich, wobei der Nutzdatenbereich zur Aufnahme der Nutzdaten und der Datentelegramm-Kennung dient.

18. Koppeleinheit nach Anspruch 17, wobei die Echtzeit-Domain einen Kommunikationszyklus aufweist, der in einem Echtzeit-Teilzyklus und in einen Nicht-Echtzeit-Teilzyklus unterteilbar ist, und wobei ein aus der Echtzeit-Domain (104) über einen Nicht-Echtzeit-Teilzyklus des Kommunikationszyklus empfangenes Nicht-Echtzeit-Datentelegramm unverändert in die Nicht-Echtzeit-Domain (102) weiterleitbar ist.

## Claims

1. Method for transmitting a data telegram (118) from a non-real-time domain (102) to a real-time domain (104), comprising the following steps:
- generation of a non-real-time data telegram (118) comprising a useful data zone (120), wherein the data telegram contains a real-time or a non-real-time identifier (122), and wherein, when the real-time identifier (122) is present, the data telegram contains a data telegram identifier (identifier i) in the useful data zone (120) of said data telegram
- transmission of the non-real-time data telegram (118) via the non-real-time domain (102) to a coupling unit (110),
- checking (126) of the non-real-time data telegram for the presence of the real-time identifier (122) by the coupling unit (110),
- in the event that the real-time identifier (122) is present: transmission of the useful data and of the real-time identifier (identifier i) from the useful data zone (120) of the non-real-time data telegram (118) to a user interface (128) of the coupling node, storage of the useful data in a storage zone (134) of a communication memory (132) which is assigned to the identifier,
- cyclic processing of a send list (123) which contains the data telegram identifier (identifier i) of the non-real-time data telegram, wherein the communication memory is accessed in order to generate a real-time data telegram.

2. Method according to Claim 1, wherein a send list (114) comprising data telegram identifiers (identifier i) is cyclically processed in order to generate the non-real-time data telegrams (118).

3. Method according to Claim 1 or Claim 2, wherein the real-time identifier of the non-real-time data telegram is coded in the address (122) of the non-real-time data telegram.

4. Method according to Claim 1, 2 or 3, wherein the address (122) is a specified multicast address.

5. Method according to any one of the preceding Claims 1 to 4, wherein the non-real-time data telegram (118) is an Ethernet data telegram.

6. Method according to any one of the preceding Claims 1 to 5, wherein the real-time domain has a communication cycle which can be divided up into a real-time subcycle and a non-real-time subcycle, and wherein a non-real-time data telegram is transmitted from the non-real-time domain, which has no real-time identifier, via the non-real-time subcycle to the real-time domain.

7. Coupling unit for receiving a data telegram (118) from a non-real-time domain (102) and for forwarding the data telegram to a real-time domain (104), comprising:
- means (124) for receiving a non-real-time data telegram (118) comprising a useful data zone (120), wherein the data telegram contains a real-time or a non-real-time identifier (identifier i), and wherein, when the real-time identifier (122) is present, the data telegram contains a data telegram identifier in the useful data zone of said data telegram,
- means (126) for checking the non-real-time data telegram for the presence of the real-time identifier,
- means for transferring the useful data and the data telegram identifier from the useful data zone (120) of the non-real-time data telegram to a user interface (128) when the real-time identifier is present,
- means (130)for storing the useful data in a storage zone (134) of a communication memory (132) which is assigned to the identifier,
- means for cyclically processing a send list (138) which contains the data telegram identifier (identifier i), wherein the communication memory (132) is accessed in order to generate a real-time data telegram for forwarding via the real-time domain.

8. Coupling unit according to Claim 7, wherein the means (124) for checking are fashioned such that the presence of a specified address (122) in the non-real-time data telegram (118) is checked.

9. Coupling unit according to Claim 8, wherein the specified address is a multicast address.

10. Coupling unit according to any one of the preceding Claims 7, 8 or 9, wherein the non-real-time data telegram (118) is an Ethernet data telegram.

11. Coupling unit according to any one of the preceding Claims 7 to 10, wherein the non-real-time data telegram (118) is forwarded by means of a real-time identifier in the real-time subcycle of a communication cycle.

12. Computer program product, in particular a digital storage medium, for generating a non-real-time data telegram (118) for a subscriber (106) of a non-real-time domain (102), comprising program means for implementing the following steps:
- cyclic processing of a send list (114) which contains a sequence of data telegram identifiers (identifier i) of real-time data telegrams of a real-time domain (104),
- generation of a non-real-time data telegram (118) for each identifier of the send list (114), wherein the non-real-time data telegram has a useful data zone (120), and the data telegram identifier (identifier i) and useful data are accommodated in the useful data zone.

13. Computer program product according to Claim 12, wherein the program means are fashioned for labelling the non-real-time data telegram (118) with a real-time identifier (122).

14. Computer program product according to Claim 12 or Claim 13, wherein the real-time identifier is a specified address (122), preferably a specified multicast address.

15. Method for transmitting a data telegram from a real-time domain (104) to a non-real-time domain (102), comprising the following steps:
- cyclic processing of a receive list which contains a data telegram identifier of a real-time data telegram,
- storage of the useful data of the received real-time data telegram with the identifier in a communication memory (132),
- transfer of the useful data and of the identifier to a user interface (128),
- generation of a non-real-time data telegram comprising a useful data zone, wherein the useful data zone serves for accommodating the useful data and the data telegram identifier.

16. Method according to Claim 15, wherein the real-time domain has a communication cycle which can be subdivided into a real-time subcycle and a non-real-time subcycle, and wherein a non-real-time data telegram received from the real-time domain (104) via a non-real-time subcycle of the communication cycle is forwarded unchanged to the non-real-time domain (102).

17. Coupling unit for transmitting a data telegram from a real-time domain (104) to a non-real-time domain (102), comprising:
- means for cyclically processing a receive list which contains data telegram identifiers of real-time data telegrams,
- means for storing the useful data of a received real-time data telegram in a communication memory (132),
- means for transmitting the useful data and the identifier to a user interface (128),
- means for generating a non-real-time data telegram comprising a useful data zone, wherein the useful data zone serves for accommodating the useful data and the data telegram identifier.

18. Coupling unit according to Claim 17, wherein the real-time domain has a communication cycle which can be subdivided into a real-time subcycle and a non-real-time subcycle, and wherein a non-real-time data telegram received from the real-time domain (104) via a non-real-time subcycle of the communication cycle is forwarded unchanged to the non-real-time domain (102).

## Revendications

1. Procédé de transmission d'un télégramme de données (118) d'un domaine non en temps réel (102) à un domaine en temps réel (104) avec les étapes suivantes :
- production d'un télégramme de données non en temps réel (118) avec une zone de données utiles (120), le télégramme de données contenant un identificateur de temps réel ou non (122) et le télégramme de données contenant un identificateur de télégramme de données (identificateur i) dans sa zone de données utiles (120) lorsque l'identificateur de temps réel (122) est présent,
- transmission du télégramme de données non en temps réel (118) par l'intermédiaire du domaine non en temps réel (102) à une unité de connexion (110),
- vérification (126) du télégramme de données non en temps réel quant à la présence de l'identificateur de temps réel (122) par l'unité de connexion (110),
- si l'identificateur de temps réel (122) est présent : transfert des données utiles et de l'identificateur de télégramme de données (identificateur i) de la zone de données utiles (120) du télégramme de données non en temps réel (118) à une interface d'application (128) du noeud de connexion, mémorisation des données utiles dans une zone de mémoire (134) d'une mémoire de communication (132), laquelle zone de mémoire est associée à l'identificateur,
- traitement cyclique d'une liste d'émission (123) qui contient l'identificateur de télégramme de données (identificateur i) du télégramme de données non en temps réel, un accès à la mémoire de communication étant effectué pour produire un télégramme de données en temps réel.

2. Procédé selon la revendication 1, dans lequel on traite de façon cyclique une liste d'émission (114) avec des identificateurs de télégrammes de données (identificateur i) pour produire les télégrammes de données non en temps réel (118).

3. Procédé selon la revendication 1 ou 2, dans lequel l'identificateur de temps réel du télégramme de données non en temps réel est codé dans l'adresse (122) du télégramme de données non en temps réel.

4. Procédé selon la revendication 1, 2 ou 3, dans lequel l'adresse (122) est une adresse déterminée de diffusion multiple.

5. Procédé selon l'une des revendications précédentes 1 à 4, dans lequel le télégramme de données non en temps réel (118) est un télégramme de données Ethernet.

6. Procédé selon l'une des revendications précédentes 1 à 5, dans lequel le domaine en temps réel comporte un cycle de communication qui peut être divisé en un cycle partiel en temps réel et un cycle partiel non en temps réel, un télégramme de données non en temps réel étant transmis à partir du domaine non en temps réel, qui ne comporte pas d'identificateur de temps réel, vers le domaine en temps réel par l'intermédiaire du cycle partiel non en temps réel.

7. Unité de connexion pour la réception d'un télégramme de données (118) provenant d'un domaine non en temps réel (102) et pour la retransmission du télégramme de données vers un domaine en temps réel (104), comprenant :
- des moyens (124) pour recevoir un télégramme de données non en temps réel (118) avec une zone de données utiles (120), le télégramme de données contenant un identificateur de temps réel ou non (122) et le télégramme de données contenant un identificateur de télégramme de données (identificateur i) dans sa zone de données utiles lorsque l'identificateur de temps réel (122) est présent,
- des moyens (126) pour vérifier le télégramme de données non en temps réel quant à la présence de l'identificateur de temps réel,
- des moyens pour transférer les données utiles et l'identificateur de télégramme de données de la zone de données utiles (120) du télégramme de données non en temps réel à une interface d'application (128) lorsque l'identificateur de temps réel est présent,
- des moyens (130) pour mémoriser les données utiles dans une zone de mémoire (134) d'une mémoire de communication (132), laquelle zone de mémoire est associée à l'identificateur,
- des moyens pour traiter de façon cyclique une liste d'émission (138) qui contient l'identificateur de télégramme de données (identificateur i), un accès à la mémoire de communication (132) étant effectué pour la production d'un télégramme de données en temps réel en vue de la retransmission par l'intermédiaire du domaine en temps réel.

8. Unité de connexion selon la revendication 7, les moyens (124) pour la vérification étant conçus de telle sorte que la présence d'une adresse déterminée (122) dans le télégramme de données non en temps réel (118) est vérifiée.

9. Unité de connexion selon la revendication 8, l'adresse déterminée étant une adresse de diffusion multiple.

10. Unité de connexion selon l'une des revendications précédentes 7, 8 ou 9, le télégramme de données non en temps réel (118) étant un télégramme de données Ethernet.

11. Unité de connexion selon l'une des revendications précédentes 7 à 10, la retransmission du télégramme de données non en temps réel (118) s'effectuant avec un identificateur de temps réel dans le cycle partiel en temps réel d'un cycle de communication.

12. Produit formant programme informatique, notamment support de mémorisation numérique, pour la production d'un télégramme de données non en temps réel (118) pour un utilisateur (106) d'un domaine non en temps réel (102), avec des moyens formant programmes pour la mise en oeuvre des étapes suivantes :
- traitement cyclique d'une liste d'émission (114) qui contient (104) une séquence d'identificateurs de télégrammes de données (identificateur i) de télégrammes de données en temps réel d'un domaine en temps réel,
- production d'un télégramme de données non en temps réel (118) pour chaque identificateur de la liste d'émission (114), le télégramme de données non en temps réel comportant une zone de données utiles (120) et l'identificateur de télégramme de données (identificateur i) et des données utiles étant enregistrés dans la zone de données utiles.

13. Produit formant programme informatique selon la revendication 12, les moyens formant programmes étant conçus pour caractériser le télégramme de données non en temps réel (118) avec un identificateur de temps réel (122).

14. Produit formant programme informatique selon la revendication 12 ou 13, l'identificateur de temps réel étant une adresse déterminée (122), de préférence une adresse déterminée de diffusion multiple.

15. Procédé de transmission d'un télégramme de données d'un domaine en temps réel (104) à un domaine non en temps réel (102) avec les étapes suivantes :
- traitement cyclique d'une liste de réception qui contient un identificateur d'un télégramme de données en temps réel,
- mémorisation des données utiles du télégramme de données en temps réel reçu avec l'identificateur dans une mémoire de communication (132),
- transfert des données utiles et de l'identificateur vers une interface d'application (128),
- production d'un télégramme de données non en temps réel avec une zone de données utiles, la zone de données utiles servant à l'enregistrement des données utiles et de l'identificateur de télégramme de données.

16. Procédé selon la revendication 15, le domaine en temps réel comportant un cycle de communication qui peut être divisé en un cycle partiel en temps réel et un cycle partiel non en temps réel et un télégramme de données non en temps réel reçu du domaine en temps réel (104) par l'intermédiaire d'un cycle partiel non en temps réel du cycle de communication étant retransmis sans changement vers le domaine non en temps réel (102).

17. Unité de connexion pour la transmission d'un télégramme de données d'un domaine en temps réel (104) à un domaine non en temps réel (102), comprenant :
- des moyens pour traiter de façon cyclique une liste de réception qui contient des identificateurs de télégrammes de données en temps réel,
- des moyens pour mémoriser les données utiles d'un télégramme en temps réel reçu dans une mémoire de communication (132),
- des moyens pour transférer les données utiles et l'identificateur vers une interface d'application (128),
- des moyens pour produire un télégramme de données non en temps réel avec une zone de données utiles, la zone de données utiles servant à l'enregistrement des données utiles et de l'identificateur de télégramme de données.

18. Unité de connexion selon la revendication 17, le domaine en temps réel comportant un cycle de communication qui peut être divisé en un cycle partiel en temps réel et un cycle partiel non en temps réel et un télégramme de données non en temps réel reçu du domaine en temps réel (104) par l'intermédiaire d'un cycle partiel non en temps réel du cycle de communication étant retransmis sans changement vers le domaine non en temps réel (102).
